# EUROPÄISCHE PATENTSCHRIFT

(11) **EP 0 687 154 B1**
(45) Veröffentlichungstag und Bekanntmachung des Hinweises auf die Patenterteilung: **02.05.1997**
(21) Anmeldenummer: 93920850.0
(22) Anmeldetag: 30.09.1993
(51) Int. Cl.: A47J 27/12

(54) **STAPEL-TOPFSET**
SET OF STACKABLE POTS
JEU DE MARMITES EMPILABLES

(30) Priorität: 26.04.1993 DE 4313550; 10.09.1993 DE 4330653
(43) Veröffentlichungstag der Anmeldung: 20.12.1995
(60) Teilanmeldung: 96105437.6
(73) Patentinhaber: HEINRICH BERNDES GMBH & CO. KG, D-59757 Arnsberg (DE)
(72) Erfinder: KLOPPSTECK, Gerd, D-59757 Arnsberg (DE)
(74) Vertreter: Helber, Friedrich G., Dipl.-Ing.
(86) Internationale Anmeldenummer: EP9302680
(87) Internationale Veröffentlichungsnummer: WO9424914

(56) Entgegenhaltungen:
- EP-A- 0 297 412
- EP-A- 0 499 849
- EP-A- 0 511 938
- CH-A- 140 651
- DE-A- 3 631 372
- FR-A- 2 378 486
- Prospekt von Silit-Werke GmbH & Co KG:"Topfserie Silit 2000"

## Beschreibung

Die Erfindung betrifft einen Stapel-Topfset mit einer Anzahl von platzsparend ineinander stapelbaren Töpfen, insbesondere Kochtöpfen unterschiedlicher Größe, von denen zumindestens einige mit Griffen versehen sind, und deren Durchmesser und Höhe vom im Stapel untersten Topf zum im Stapel obersten Topf derart abnimmt, daß ein jeweils in einem im Stapel vorausgehend einzusetzender, mit Griffen versehener Topf sich direkt oder indirekt auf dem oberen Rand eines benachbarten größeren Topfs mit seinen beiden, an diametral gegenüberliegenden Seiten im Bereich seines oberen Randes vorgesehenen Griffen abstützt, an denen Zentrierflächen vorgesehen sind, zwischen denen ein Abstand so gewählt ist, daß die Zentrierflächen gegen seitliche Verschiebung gesichert in die Mündung eines im Stapel darunter angeordneten Topfs eingreifen.

Im Haushalt ist es üblich, daß die Hausfrau Kochtöpfe, Schüsseln und anderes Geschirr unterschiedlicher Größe im Schrank ineinandergestapelt aufbewahrt, um so Schrankraum zu sparen. Die Größe und Anzahl der in solchen Stapeln enthaltenen Töpfe ist aber mehr oder weniger zufällig, und die Stapel sind häufig instabil, so daß ein Abkippen eines zu kleinen Topfs in einem größeren Topf auftreten kann, was bei Töpfen mit empfindlicher, z.B. polierter oder mit einem Dekor versehenen oberfläche, zu Kratzern oder Schrammen führen kann. Auch im Innern der Töpfe vorgesehene Beschichtungen, z.B. Antihaftversiegelungen aus Polytetrafluorethylen (PTFE) können beschädigt werden. Insbesondere auch aus diesem Grund, d.h. zur Vermeidung einer Beschädigung der Oberfläche oder von Beschichtungen, werden Töpfe von den Herstellern einzeln verpackt und dann, zu größeren Gebinden zusammengestellt, zu den Händlern versandt, was im Vergleich zum an sich denkbaren Versand von ineinander gestapelten Töpfen zwangsläufig größeren Transportraum und somit höhere Transportkosten erfordert.

Aus der EP-A-511 938 ist ein Stapel-Topfset bekannt, bei dem sich die Töpfe mittels ihrer Griffe auf dem oberen Rand des unten liegenden Topfs abstützen. Da sie sich jedoch in einer horizontalen Ebene relativ zueinander verschieben können, ist die Beschädigung der Oberfläche oder einer gegebenenfalls vorgesehenen Beschichtung auch bei diesem Topfset im gestapelten Zustand nicht ausgeschlossen.

Darüber hinaus ist ein Stapel-Topfset bekannt geworden (siehe "Topfserie SiLiT 2000" im Prospekt von den Silit-Werke GmbH & Co KG), dessen einzelne Töpfe mit Griffen versehen sind, auf denen sich der jeweils kleinere Topf auf einem oberen Rand eines im Stapel nachfolgenden größeren Topfes abstützt. Diese Griffe sind jeweils mit Zentrierungen versehen, an denen der jeweils kleinere Topf so geführt wird, daß Verschiebungen des kleinere Topfes innerhalb der Mündung des größeren Topfes vermieden werden. Wird jedoch der jeweils größere Topf dem Stapel entnommen, so entfällt jegliche Führung des kleineren Topfes in der Mündung des nächst größeren Topfes. Der kleinere Topf bewegt sich in dem nächstfolgenden größeren Topf in beliebiger Weise, wenn entweder der gesamte Stapel-Topfset transportiert wird oder der kleinere Topf in den Stapel zurückgeführt wird, obgleich der nächstfolgende größere Topf noch fehlt.

Der Erfindung liegt die Aufgabe zugrunde, einen Stapel-Topfset zu schaffen, bei dem eine Führung des jeweils kleineren Topfes auch dann noch gewährleistet ist, wenn der nächstfolgende größere Topf des Stapels diesem entnommen ist.

Diese Aufgabe wird erfindungsgemäß nunmehr dadurch gelöst, daß jeweils zwei Zentrierflächen an einem Befestigungskörper vorgesehen sind, der unterhalb einer zum Ergreifen der Griffe dienenden eigentlichen Handhabe angebracht ist, und die Zentrierflächen der am Topf einander gegenüberliegend befestigten Befestigungskörper unterschiedliche Abstände voneinander einhalten, die so gewählt sind, daß die einen kleineren Abstand einhaltenden Zentrierflächen in der Mündung eines größeren Topfes der im Stapel unterhalb des eingesetzten Topfes angeordneten Töpfe gegen seitliches Verschieben gesichert sind.

Der auf diese Weise gestaltete Topfset besitzt den großen Vorteil, daß die einzelnen Töpfe auch dann noch ineinander zentriert sind, wenn ein einzelner Topf dem Stapel entnommen ist. Der jeweils in den Stapel zurückgeführte kleinere Topf wird im Zweifel auch auf dem im Stapel übernächsten Topf geführt, so daß ein Anschlagen der Töpfe mit Sicherheit auch dann vermieden wird, wenn der Topfset nicht vollständig sämtliche Töpfe aufweist, die zum Set gehören. Gerade dieser Einsatzfall ist für die praktische Küchenwirklichkeit von großer Bedeutung, da im Regelfall zwar nicht alle Töpfe des Sets in Benutzung sind, sondern nur einige. In diesem Falle wird nur der eine oder andere Topf dem Set entnommen. Trotzdem wird mit den mehrfachen Zentrierflächen erreicht, daß der jeweils kleinere Topf gegebenenfalls auch in einem der übernächsten im Stapel untergebrachten Töpfe geführt wird.

Die auf unterschiedlichen Durchmessern angeordneten Zentrierflächen sind zweckmäßig in den Griff-Befestigungskörpern zueinander höhenversetzt angeordnet, wobei die auf kleinerem Durchmesser vorgesehenen Zentrierflächen in bezug auf den Boden in geringerer Höhe des jeweiligen, mit den Griffen versehenen Topfs angeordnet sind, als die auf größerem Durchmesser vorgesehenen Zentrierflächen.

Die Bemessung der Höhe von zwei im Stapel aufeinanderfolgenden Töpfen ist vorzugsweise so gewählt, daß der Deckel eines Topfs des Stapels in den Zwischenraum zwischen dessen Boden und dem im Stapel darunter befindlichen Topf paßt. Auf diese Weise können also auch die zu den Kochtöpfen passenden Deckel in den Stapel einbezogen werden.

Neben Töpfen mit auf gegenüberliegenden Seiten vorgesehenen Griffen können auch grifflose Topfeinsätze in den Stapel einbezogen werden, wobei der obere Rand eines derartigen grifflosen Topfeinsatzes dann so nach außen umgebogen ist, daß sein Durchmesser größer als der lichte Innendurchmesser des im Stapel darunter vorgesehenen Topfes ist. In diesem Fall stützt sich dann also der umgebogene freie Rand des grifflosen Topfeinsatzes - anstelle der Griffe - auf dem oberen Rand des im Stapel darunter befindlichen Topfes ab. Dabei empfiehlt es sich dann, am oberen freien Rand des grifflosen Topfeinsatzes bzw. der grifflosen Topfeinsätze noch einen nach unten in Richtung seines Bodens umgekanteten streifenförmigen Rand-Begrenzungsabschnitts anzusetzen, der verhindert, daß der jeweilige Einsatz sich soweit seitlich im zugehörigen Kochtopf verschieben kann, daß er ungewollt bis an dessen Innenwandung verschoben wird und eine dort gegebenenfalls vorgesehene Antihaft-Beschichtung verletzt.

Der grifflose Topfeinsatz kann beispielsweise als bodenseitig gelochter Dünster für den ihn im Stapel aufnehmenden, mit Griffen versehenen Topf ausgebildet sein. Alternativ kann der grifflose Topf auch als separat verwendbare Schüssel ausgebildet sein. Schließlich kann der grifflose Topf auch ein bodenseitig geschlossener Wasserbadeinsatz für den ihn im Stapel aufnehmenden, mit Griffen versehenen Topf sein.

Die Deckel der Töpfe sind zweckmäßig mittig mit einem in Richtung ins Topfinnere tiefgeprägten Bereich versehen, in welchem der Deckelgriff befestigt ist, wobei die Höhe des Deckelgriffs höchstens gleich der Tiefe des tiefgeprägten Deckelbereichs ist. Dadurch wird der Höhenunterschied zweier im Stapel aufeinanderfolgender Töpfe auf das Maß der Höhe des Deckels beschränkt, welcher im Stapel zwischen ihren Böden angeordnet werden soll. Dadurch wird es möglich, die Deckel im Bedarfsfall auch als Untersatz zu verwenden, auf denen ein noch heißer Kochtopf abgestellt werden kann. Außerdem kann in den tiefgeprägten Bereich beim Garvorgang Wasser eingefüllt werden, welches den Deckel vergleichsweise kühl hält, so daß der im geschlossenen Topf aufsteigende Wasserdampf am Deckel kondensiert, zurücktropft und wieder verdampft wird. D.h. es kommt zu einer vorteilhaften permanenten Wasserdampf-Zirkulation, ohne daß Wasser nachgefüllt werden muß.

Das erfindungsgemäße Topfset wird vorzugsweise von Töpfen sowie gegebenenfalls Einsätzen gebildet, die - ebenso wie der Aufsatz - in an sich bekannter Weise aus korrosionsbeständigem Stahlblech hergestellt sind, obwohl grundsätzlich natürlich auch Töpfe aus anderen Materialien, z.B. aus emailliertem Metall, Aluminium u.dgl. in der erfindungsgemäßen Weise zu Stapeln zusammensetzbar sind. Im Falle von Töpfen aus korrosionsbeständigem Stahlblech sind die zur Erhitzung oder zum Garen von Speisen auf Kochstellen vorgesehenen Töpfe dann in an sich bekannter Weise mit einer Bodenplatte aus einem gut wärmeleitenden und wärmespeichernden Metall, d.h. einem sogenannten "Sandwich-Boden" oder auch einen "Kapsel-Boden", bei dem die gut wärmeleitende und wärmespeichernde Bodenplatte zusätzlich noch in korrosionsbeständigem Stahlblech eingekapselt ist, versehen.

Die Erfindung ist in der folgenden Beschreibung eines Ausführungsbeispiels in Verbindung mit der Zeichnung näher erläutert, und zwar zeigt bzw. zeigen:
- Fig. 1: eine Schnittansicht durch ein Ausführungsbeispiel eines erfindungsgemäßen Topfstapels;
- Fig. 2 bis 10: jeweils Schnittansichten der in dem in Figur 1 gezeigten Stapel enthaltenen Töpfe bzw. Topf-Einsätze;
- Fig. 11: eine perspektivische Ansicht eines der bei den mit Griffen versehenen Töpfen verwendeten Griffen in vergrößerter perspektivischer Darstellung; und
- Fig. 12: eine Schnittansicht durch den Griff, gesehen in Richtung der Pfeile 12-12 in Fig. 11.

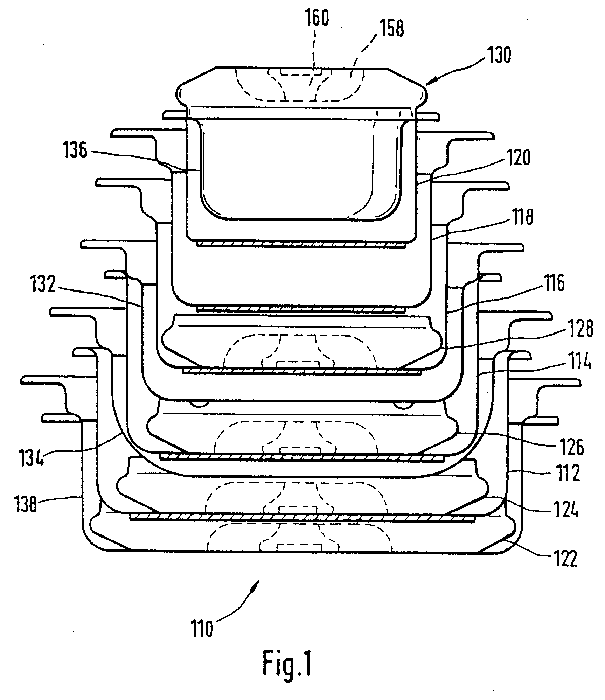

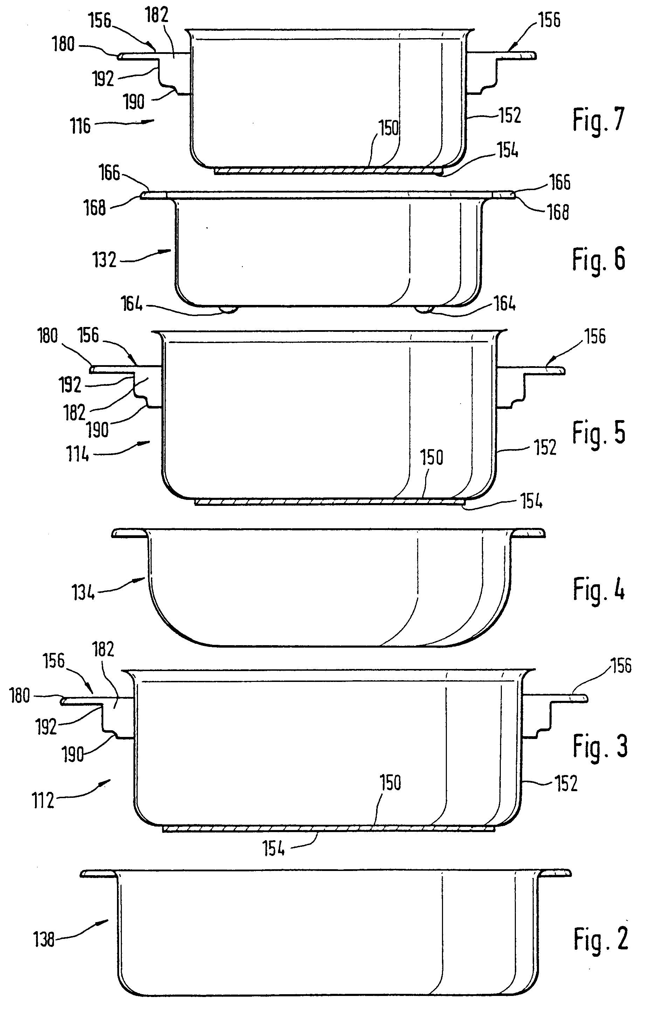

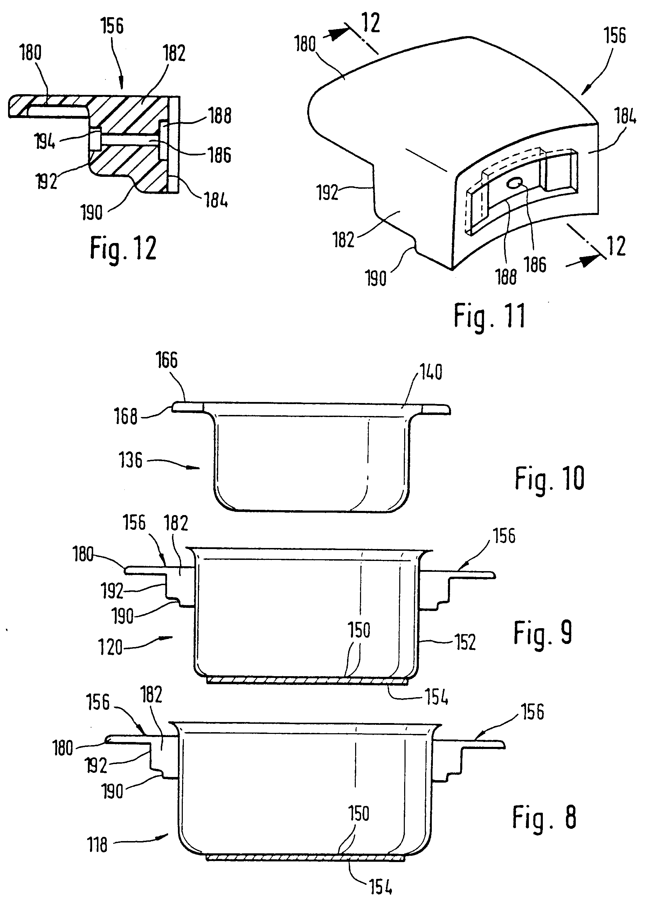

Das in Fig. 1 bis auf die Topf-Deckel in einer senkrechten Ebene geschnitten dargestellte, in seiner Gesamtheit mit 110 bezeichnete gestapelte Topfset umfaßt insgesamt fünf in den Fig. 3, 5, 7, 8 und 9 dargestellte Kochtöpfe 112, 114, 116, 118 und 120 unterschiedlicher Größe mit zugehörigen Deckeln 122, 124, 126, 128 und 130, einen bodenseitig gelochten Dünster 132 (Fig. 6), eine Schüssel 134 (Fig. 4) und einen Wasserbad-Einsatz 136 (Fig. 10), d.h. insgesamt vierzehn Teile, die - wie der Fig. 1 entnehmbar ist - extrem raumsparend ineinander gestapelt sind.

Die Kochtöpfe 112, 114, 116, 118 und 120 sind grundsätzlich in gleicher und an sich bekannter Weise ausgestaltet, so daß die Beschreibung des in Figur 3 gezeigten Kochtopfs 112 zur Erläuterung ihres grundsätzlichen Aufbaus genügt. Die Kochtöpfe haben den üblichen - im vorliegenden Fall aus korrosionsbeständigem Stahlblech hergestellten - zylindrischen, an einer Seite durch einen ebenflächigen Boden 150 geschlossenen Topfkörper 152. Auf der Außenseite des ebenflächigen Bodens 150 ist eine Platte 154 aus gut wärmeleitendem und wärmespeicherndem Metall, beispielsweise aus Kupfer oder Aluminium aufgelötet, die zusätzlich auf ihrer topfabgewandten Flachseite mit einer wiederum aus korrosionsbeständigem Stahlblech ausgestanzten aufgelöteten - nicht dargestellten - Ronde versehen sein kann. Solche Topfböden werden auch als "Sandwich-Böden" bezeichnet. Der obere offene Rand der zylindrischen Wandung des Kochtopfs ist nach außen umgebogen, um das Einführen des unteren Rands des zugehörigen Deckels 122 ebenso wie das Ausgießen von Flüssigkeit aus dem Kochtopf zu erleichtern.

An gegenüberliegenden Seiten der Wandung des Kochtopfs sind die in der Zeichnungsfigur schematisch dargestellten diametral vortretenden Handgriffe 156 befestigt, die nachfolgend in Verbindung mit den Fig. 11 und 12 noch näher beschrieben werden.

Die Kochtöpfe 112, 114, 116, 118 und 120 unterscheiden sich also nicht grundsätzlich, jedoch in ihren Größenabmessungen, d.h. ihrem Durchmesser und in der Höhe, wobei die Durchmesserunterschiede so gewählt sind, daß der jeweilige Kochtopf in den vorausgehenden Kochtopf derart einsetzbar ist, daß seine radial vortretenden Griffe 156 sich jeweils auf dem oberen Rand des im Stapel darunter befindlichen Kochtopfs - oder eines weiteren grifflosen Topfs - aufsetzen können. Die Höhenunterschiede zwischen zwei ineinandergestapelten Töpfen ist dagegen so gewählt, daß zwischen der Innenseite des Bodens des unteren Topfs und der Außenseite des Bodens des im Stapel folgenden Topfs hinreichend Raum für den Deckel des im Stapel oberen Topfs gegeben ist. Damit das Fassungsvermögen der Töpfe nicht unnötig verkleinert wird, sollte dieser Zwischenraum und somit auch die zu den Kochtöpfen gehörenden Deckel 122, 124, 126, 128 und 130 möglichst niedrig gehalten werden. Dies wird dadurch erreicht, daß die in üblicher Weise aus korrosionsbeständigem Metallblech im Stanz-Preßverfahren hergestellten Deckel mittig einen in Richtung ins Topfinnere tiefgeprägten Bereich 158 aufweisen, in welchem mittig jeweils der Deckelgriff 160 befestigt ist. Der Deckelgriff ist dabei in seiner Höhe etwa gleich der Tiefe des tiefgeprägten Bereichs 158 gewählt, d.h. tritt nicht über den Deckel 130 nach oben vor. Dadurch nehmen die Deckel in Höhenrichtung im Stapel nur geringen Raum ein, d.h. erlauben platzsparendes Stapeln. Außerdem können sie erforderlichenfalls auch als Untersatz für noch heiße Kochtöpfe verwendet werden. Darüber hinaus kann beim Garvorgang in den tiefgeprägten Bereich auch Wasser gegossen werden, welches den Deckel im Vergleich zu der im Kochtopf herrschenden Temperatur so abkühlt, daß der Wasserdampf an der Deckel-Innenseite kondensiert, ins Kochgut zurücktropft und dann wieder verdampft wird. D.h. der beim Kochen entstehende Wasserdampf zirkuliert während des Gar- oder Dünstvorgangs permanent.

In Figur 6 ist ein in den im Stapel unter ihm angeordneten Kochtopf 114 einsetzbarer griff- und deckelloser topfförmiger Einsatz 132 gezeigt, auf dessen Boden keine zusätzliche Metallplatte aufgelötet ist, in den aber in gleichmäßigen Winkelabständen verteilt vom Boden nach unten vorstehende kalottenförmige Füße 164 eingeprägt sind, die sicherstellen, daß der auf einer Unterlage aufgesetzte Einsatz 132 mit dem Boden etwas oberhalb der Unterlage steht. Der Boden des Einsatzes 132 ist - was in Figur 6 nicht dargestellt ist - gelocht, so daß der Einsatz also als Dünster verwendbar ist. Mit ungelochtem Boden wäre er dagegen als übliche Schüssel oder Wasserbad-Einsatz verwendbar. Die Halterung des Einsatzes 132 im Kochtopf 114 erfolgt durch den entsprechend nach außen umgebogenen Rand 166, der sich im Stapel auf dem oberen Rand des Kochtopfs 114 aufsetzen kann und diesen sozusagen passend übergreift. Ein am äußeren Rand angesetzter, in Richtung zum Boden umgekanteter streifenförmiger Rand-Begrenzungsabschnitt 168 verhindert, daß der Einsatz 132 sich so weit seitlich im Kochtopf 114 verschieben kann, daß er eine gegebenenfalls vorgesehene Antihaftbeschichtung in diesem Kochtopf verkratzen kann. Außerdem erleichtert diese Randausgestaltung das Ergreifen des Einsatzes.

In Figur 4 ist ein weiterer griff- und deckelloser Einsatz 134 mit durchgehendem, d.h. nicht gelochtem, Boden dargestellt, der in den Kochtopf 112 passend einsetzbar und auf dessen oberem Rand abstützbar ist. Der Einsatz 134 möge als übliche Rühr-Schüssel dienen. Schließlich ist in Figur 10 noch ein weiterer, dem Einsatz 134 im wesentlichen ähnlicher, wenn auch in den Abmessungen kleinerer Einsatz 136 für den Kochtopf 120 gezeigt, der als Wasserbad-Einsatz dienen möge.

Unter dem mit Griffen versehenen Kochtopf 112 größten Durchmessers ist schließlich noch ein griffloser, z.B. als Auflaufform verwendbarer Topf 138 (Fig. 2) vorgesehen.

In Figur 11 ist einer der für die Kochtöpfe 112, 114, 116, 118 und 120 des Topfsets 110 vorgesehenen Griffe 156 perspektivisch und in Figur 12 im Schnitt dargestellt, wobei er - in an sich bekannter Weise - aus einem schlecht wärmeleitenden duroplastischen Kunststoff hergestellt sein möge. Der Griff 156 weist eine im dargestellten Fall als Griffplatte geformte Handhabe 180 auf, welche integral von einem Befestigungskörper 182 vorsteht, der an seiner dem zugehörigen Kochtopf zugewandten Seite eine dem Außendurchmesser von dessen Topfkörper 152 komplementär gekrümmte Befestigungsfläche 184 aufweist. Zur Befestigung des Griffs 156 am Topfkörper möge eine durch eine Befestigungsbohrung 186 im Befestigungskörper 182 hindurchgeführte (nicht gezeigte) Befestigungsschraube dienen, die in ein Gewinde in eine auf dem Topfkörper hart aufgelötete oder aufgeschweißte - ebenfalls nicht gezeigte - Lasche eingeschraubt wird. In der bestimmungsgemäßen Befestigungsstellung liegt die mit Gewinde versehene Lasche dann in der in der Befestigungsfläche vorgesehenen Vertiefung 188, wodurch der Befestigungskörper 182 und somit der Griff 156 in feste Anlage seiner Befestigungsfläche 184 am Topf angezogen werden kann. Gleichzeitig dient die Lasche auch als Verdrehsicherung für den Griff 156. An seiner, der Befestigungsfläche 184 gegenüberliegenden Seite ist der Befestigungskörper 182 mit zwei höhenversetzten gebogenen Zentrierflächen 190, 192 versehen, deren Querschnitt entsprechend dem Querschnitt des oberen Randes eines im Stapel darunter angeordneten Topfs geformt ist, wobei der zwischen den Zentrierflächen 190 der beiden Griffe 156 eines Topfs gemessene Abstand dem Durchmesser des unter diesem Topf im Stapel nächstfolgenden und der zwischen den Zentrierflächen 192 gemessene Abstand dem Durchmesser des sich im Stapel dann weiter unten anschließenden Topfs entspricht. Da die Zentrierflächen in Umfangsrichtung entsprechend dem Durchmesser der Töpfe, in welche sie eingreifen, gebogen ausgebildet sind, werden die mit Griffen versehenen Töpfe in den sie aufnehmenden Töpfen exakt zentriert. Durch das Vorhandensein von zwei höhenversetzten Zentrierflächen 190, 192 ist es auch möglich, einen Topf aus dem Stapel herauszunehmen, ohne daß der zuvor mittels seiner Griffe in diesem Topf zentrierte Topf dann im nächstfolgenden Topf größeren Durchmessers seitlich verschiebbar wäre. Vielmehr werden dann die in größerem Abstand voneinander angeordneten weiteren Zentrierflächen 192 der Griffe 156 wirksam und zentrieren den Topf im Topf größeren Durchmessers.

Zu dem in Fig. 10 gesondert dargestellten Wasserbad-Einsatz 136 ist noch zu bemerken, daß dieser im Mündungsbereich so ausgebildet ist, daß der Deckel 130 in eine Vertiefung 140 ebenso wie in den Kochtopf 120 selbst paßt. Dann schließt sich der nach außen umgebogene Rand 166 und an diesen der nach unten umgekantete Randbereich 168 an. Der Durchmesser des nach außen umgebogenen Rands kann so groß bemessen werden, daß nicht nur der obere Rand des Kochtopfs 120 (Fig. 9), sondern auch noch der nächstgrößere Kochtopf 118 (Fig. 8) an der Unterseite abgestützt und durch den streifenförmigen Randbereich 168 zentriert werden kann. Dieser Fall tritt dann ein, wenn der Kochtopf 120 dem Stapel ohne den Wasserband-Einsatz 136 entnommen wird.

Auch der in Fig. 6 gesondert dargestellte Dünster 132 ist im Mündungsbereich - entsprechend dem vorbeschriebenen Wasserbad-Einsatz 136 - so ausgebildet, daß der Deckel 126 in ihn ebenso wie in den zugehörigen Kochtopf 114 paßt. Insbesondere bei der Verwendung des Dünsters 132 im Kochtopf 114 kommt dann die früher in Verbindung mit der speziellen Ausgestaltung des Deckels erläuterte Funktion der permanenten Wasserdampf-Zirkulation mit Vorteil zum Tragen.

Es ist ersichtlich, daß im Rahmen des Erfindungsgedankens Abwandlungen und Weiterbildungen des beschriebenen Topfsets 110 möglich sind, welche sich sowohl auf die Form als auch Funktion der im Stapel vereinigten Töpfe bzw. Topfeinsätze als auch die Ausgestaltung der sie im Stapel gegen seitliche Verschiebung fixierenden Ausgestaltung betreffen. So ist ohne weiteres ersichtlich, daß die Griffe 156 der mit Griffen versehenen Kochtöpfe 112, 114, 116, 118 und 120 auch mit noch weiteren Zentrierflächen versehen werden können, wenn die hierfür erforderliche Vergrößerung der Griffe 156 in Kauf genommen wird.

## Patentansprüche

1. Stapel-Topfset (110) mit einer Anzahl von platzsparend ineinander stapelbaren Töpfen, insbesondere Kochtöpfen (112; 114; 116; 118; 120) unterschiedlicher Größe, von denen zumindestens einige mit Griffen (156) versehen sind, und deren Durchmesser und Höhe von im Stapel untersten Topf zum im Stapel obersten Topf derart abnimmt, daß ein jeweils in einem im Stapel vorausgehend einzusetzender, mit Griffen (156) versehener Topf (112; 114; 116; 118; 120) sich direkt oder indirekt auf dem oberen Rand eines benachbarten größeren Topfs mit seinen beiden, diametral gegenüberliegenden Seiten im Bereich seines oberen Randes vorgesehenen Griffen (156) abstützt, an denen Zentrierflächen (190; 192) vorgesehen sind, zwischen denen ein Abstand so gewählt ist, daß die Zentrierflächen (190, 192) gegen seitliche Verschiebung gesichert in die Mündung eines im Stapel darunter angeordneten Topfs (112, 114, 116, 118) eingreifen,
**dadurch gekennzeichnet,**
daß jeweils zwei Zentrierflächen (190, 192) an einem Befestigungskörper vorgesehen sind, der unterhalb einer zum Ergreifen der Griffe (156, 157) dienenden eigentlichen Handhabe (180) angebracht sind und die Zentrierflächen (190, 192) der am Topf (112, 114, 116, 118, 120) einander gegenüberliegend befestigten Befestigungskörper unterschiedliche Abstände voneinander einhalten, die so gewählt sind, daß die einen kleineren Abstand einhaltenden Zentrierflächen (190) in der Mündung eines kleineren (118) und die den größeren Abstand einhaltenden Zentrierflächen (192) in der Mündung eines größeren Topfes (116) der im Stapel unterhalb des eingesetzten Topfes (120) angeordneten Töpfe (112, 114, 116, 118, 120) gegen seitliches Verschieben gesichert sind.

2. Topfset nach Anspruch 1, dadurch gekennzeichnet, daß die auf unterschiedlichen Durchmessern angeordneten Zentrierflächen (190; 192) in den Griff-Befestigungskörpern (182) zueinander höhenversetzt sind.

3. Topfset nach Anspruch 1 oder 2, dadurch gekennzeichnet, daß die auf kleinerem Durchmesser vorgesehenen Zentrierflächen (190) in geringerer Höhe in bezug auf den Boden (150) des jeweiligen, mit den Griffen (156) versehenen Topfs angeordnet sind, als die auf größerem Durchmesser vorgesehenen Zentrierflächen (192).

4. Topfset nach einem der Ansprüche 1 bis 3, dadurch gekennzeichnet, daß die Bemessung der Höhe von zwei im Stapel aufeinanderfolgenden Töpfen (z.B. 116; 118) so gewählt ist, daß der Deckel (z.B. 128) eines Topfs (118) des Stapels in den Zwischenraum zwischen dessen Boden und den im Stapel darunter befindlichen Topf (116) paßt.

5. Topfset nach einem der Ansprüche 1 bis 4, gekennzeichnet durch wenigstens einen zwischen zwei mit Griffen (156) versehenen Töpfen (112, 114; 114, 116) einsetzbaren grifflosen Topfeinsatz (134, 132), dessen oberer freier Rand (166) derart nach außen umgebogen ist, daß sein Durchmesser größer als der lichte Innendurchmesser des im Stapel darunter vorgesehenen Topfs (112; 114) ist.

6. Topfset nach Anspruch 5, dadurch gekennzeichnet, daß der obere freie Rand des grifflosen Topfeinsatzes bzw. der grifflosen Topfeinsätze (132; 136) einen nach unten in Richtung seines Bodens umgekanteten streifenförmigen Rand-Begrenzungsabschnitt (168) aufweisen.

7. Topfset nach Anspruch 5 oder 6, dadurch gekennzeichnet, daß der grifflose Topfeinsatz (132) als bodenseitig gelochter Dünster für den ihn im Stapel aufnehmenden, mit Griffen versehenen Topf (114) ausgbildet ist.

8. Topfset nach Anspruch 5 oder 6, dadurch gekennzeichnet, daß der grifflose Topfeinsatz als separat verwendbare Schüssel (134) ausgebildet ist.

9. Topfset nach Anspruch 5 oder 6, dadurch gekennzeichnet, daß der grifflose Topf als bodenseitig geschlossener Wasserbadeinsatz (136) für den ihn im Stapel aufnehmenden, mit Griffen versehenen Topf (120) ausgebildet ist.

10. Topfset nach einem der Ansprüche 1 bis 9, dadurch gekennzeichnet, daß die Deckel (124; 126; 128; 130) der Töpfe (112; 114; 116; 118; 120) mittig einen in Richtung ins Topfinnere tiefgeprägten Bereich (158) aufweisen, in welchem der Deckelgriff (160) befestigt ist, und daß die Höhe des Deckelgriffs höchstens gleich der Tiefe des tiefgeprägten Deckel-Bereichs (158) ist.

11. Topfset nach einem der Ansprüche 1 bis 10, dadurch gekennzeichnet, daß die Töpfe (112; 114; 116; 118; 120) sowie die gegebenenfalls vorgesehenen Einsätze (132; 134; 136) und der gegebenenfalls vorgesehene unterste Topf (138) größten Durchmessers in an sich bekannter Weise aus korrosionsbeständigem Stahlblech hergestellt sind.

12. Topfset nach anspruch 11, dadurch gekennzeichnet, daß auf der Außenseite der Böden (150) der mit Griffen (156) versehenen, zur Erhitzung oder zum Garen von Speisen auf Kochstellen vorgesehenen Töpfe (112; 114; 116; 118; 120) eine an sich bekannte Bodenplatte (154) aus einem gut wärmeleitenden und wärmespeichernden Metall aufgebracht ist.

13. Topfset nach einem der Ansprüche 1 bis 12, dadurch gekennzeichnet, daß zumindest die mit Griffen (156) versehenen Töpfe (112; 114; 116; 118; 120) auf ihrer Innenseite mit einer an sich bekannten Antihaftversiegelung aus Polytetrafluorethylen (PTFE) versehen sind.

## Claims

1. Set of stacking pots (110) with a plurality of pots which may be stacked within one another in a space-saving manner, particularly cooking pots (112; 114; 116; 118; 120) of different size, of which at least some are provided with handles (156) and whose diameter and height reduce from the pot lowermost in the stack to the pot uppermost in the stack so that a pot (112; 114; 116; 118; 120) provided with handles (156), which is to be inserted into a preceding pot in the stack, rests with its two handles (156), which are provided on diametrically opposite sides in the region of its upper edge, directly or indirectly on the upper edge of an adjacent larger pot, on which handles centering surfaces (190;192) are provided, between which a spacing is selected so that the centering surfaces (190;192) engage, secured against lateral movement, in the opening of a pot (112, 114, 116, 118) arranged below them in the the stack, characterised in that two centering surfaces (190,192) are provided in each case on a fastening body which is mounted below an actual handle portion (180) serving for gripping the handles (156,157) and the centering surfaces (190,192) of the fastening bodies, which are secured to the pot (112, 114, 116, 118, 120) opposed to one another, are at different spacings from one another which are so selected that the centering surfaces (190) at a smaller spacing are secured against lateral movement in the opening of a smaller pot (118) and the centering surfaces (192) at the larger spacing are secured against lateral movement in the opening of a larger pot (116) of the pots (112, 114, 116, 118, 120) arranged in the stack below the inserted pot (120).

2. Set of pots as claimed in Claim 1, characterised in that the centering surfaces (190;192) arranged on different diameters are vertically offset from one another in the handle fasstening bodies (182).

3. Set of pots as claimed in Claim 1 or 2, characterised in that the centering surfaces (190) provided at the smaller diameter are arranged at a lower height with respect to the base (150) of the respective pot provided with the handles (156) than the centering surfaces (192) provided at the greater diameter.

4. Set of pots as claimed in one of Claims 1 to 3, characterised in that the height of two successive pots (e.g. 116;118) in the stack is so selected that the lid (e.g. 128) of the pot (118) of the stack fits into the space between its base and the pot (116) situated beneath it in the stack.

5. Set of pots as claimed in one of Claims 1 to 4, characterised by at least one handleless pot insert (134,132), which may be inserted between two pots (112,114;114,116) provided with handles (156) and whose upper free edge (166) is bent over outwardly such that its diameter is larger than the free internal diameter of the pot (112;114) provided beneath it in the stack.

6. Set of pots as claimed in claim 5, characterised in that the upper free edge of the handleless pot insert or the handleless pot inserts (132;136) has a strip-shaped edge boundary section (168) canted downwardly in the direction of its base.

7. Set of pots as claimed in Claim 5 or 6, characterised in that the handleless pot insert (132) is constructed as a steamer with a perforated base for the pot (114) which is provided with handles and receives it in the stack.

8. Set of pots as claimed in Claim 5 or 6, characterised in that the handleless pot insert is constructed as a separately usable bowl (134).

9. Set of pots as claimed in Claim 5 or 6, characterised in that the handleless pot insert is constructed as a water bath insert (136) with a closed base for the pot (120) which is provided with handles and receives it in the stack.

10. Set of pots as claimed in one of Claims 1 to 9, characterised in that the lids (124; 126; 128; 130) of the pots (112; 114; 116; 118; 120) have a central region (158) indented in the direction towards the interior of the pot in which the lid handle (160) is secured and that the height of the lid handle is at most the same as the depth of the indented lid region (158).

11. Set of pots as claimed in one of Claims 1 to 10, characterised in that the pots (112; 114; 116; 118; 120) and the inserts (132; 134; 136), which are optionally provided, and the lowermost pot (138) of largest diameter, which is optionally provided, are manufactured in a manner known per se from corrosion-resistant steel plate.

12. Set of pots as claimed in Claim 11, characterised in that a base plate (154) known per se of good thermally conductive and heat-storing metal is attached to the outer surface of the bases (150) of the pots (112; 114; 116; 118; 120) which are provided with handles (156) and are provided for heating or for cooking meals on cooking rings.

13. Set of pots as claimed in one of Claims 1 to 12, characterised in that at least the pots (112; 114; 116; 118; 120) which are provided with handles (156) are provided on their inner surface with a non-stick seal of polytetrafluoroethylene (PTFE).

## Revendications

1. Jeu de marmites empilables (110) ayant une pluralité de marmites empilables les unes dans les autres, de façon à économiser de la place, en particulier des petites marmites (112; 114; 116; 118; 120) de tailles différentes, dont au moins certaines sont pourvues de poignées (156) et dont le diamètre et la hauteur vont en diminuant depuis la marmite située en dessous de la pile vers celle située au-dessus de la pile, de manière à ce que chaque marmite, dont on prévoit qu'elle doit être utilisée dans la pile et qui est pourvue de poignées (156) prenne appui, directement ou indirectement, sur le bord supérieur de la marmite voisine plus grosse, par ses deux poignées (156), prévues sur des côtés diamétralement opposés, dans la zone de son bord supérieur, poignées (156) sur lesquelles sont prévues des surfaces de centrage (190, 192), entre lesquelles est choisi un espacement tel que les surfaces de centrage (190; 192) s'engagent dans l'ouverture d'une marmite située au-dessous dans la pile, en étant bloquées pour empêcher tout déplacement latéral,
caractérisé par le fait que
chaque fois deux surfaces de centrage (190, 192) sont prévues sur un corps de fixation, monté au-dessous d'une manette (180) proprement-dite, servant à saisir les poignées (156, 157) et les surfaces de centrage (190, 192) des corps de fixation fixés en regard les uns des autres sur la marmite (112; 114; 116; 118; 120) respectent entre elles des espacements différents, et choisis de manière que les surfaces de centrage (190) à plus petit espacement pénétrant dans l'ouverture d'une petite marmite et les surfaces de centrage (192) à plus grand espacement pénétrant dans l'ouverture d'une grande marmite (116), parmi les marmites (112; 114; 116; 118; 120) disposées au-dessous de la marmite (120) insérée soient assurées contre tout déplacement latéral.

2. Jeu de marmites selon la revendication 1, caractérisé par le fait que les surfaces de centrage (190; 192), disposées sur des diamètres différents, sont décalées en hauteur l'une par rapport à l'autre dans les corps de fixation de poignées (182).

3. Jeu de marmites selon la revendication 1 ou 2, caractérisé par le fait que les surfaces de centrage (190) prévues sur le petit diamètre sont disposées avec une hauteur moindre, par rapport au fond (150) de la marmite respective pourvue des poignées (156), que le sont les surfaces de centrage (192) prévues sur le plus grand diamètre.

4. Jeu de marmites selon l'une des revendications 1 à 3, caractérisé par le fait que la valeur de la hauteur de deux marmites (par exemple, les marmites 116, 118) se suivant dans la pile est choisie telle que le couvercle (par exemple 128) d'une marmite (118) de la pile s'adapte dans l'espace intermédiaire existant entre son fond et la marmite (116) se trouvant au-dessous dans la pile.

5. Jeu de marmites selon l'une des revendications 1 à 4, caractérisé par au moins une partie de marmite rapportée (134, 132) ne portant pas de poignée et pouvant être inséré entre deux marmites (112, 114; 114, 116) pourvues de poignées (156), partie rapportée dont le bord supérieur libre (166) est replié vers l'extérieur de manière que son diamètre soit supérieur au diamètre intérieur libre de la marmite (112; 114) prévue au-dessous dans la pile.

6. Jeu de marmites selon la revendication 5, caractérisé par le fait que le bord libre supérieur de la partie rapportée de la marmite sans poignée, respectivement des parties de marmite sans poignée (132; 136), présente une section de délimitation de bordure (168) en forme de bande, rabattue vers le bas dans la direction de son fond.

7. Jeu de marmites selon la revendication 5 ou 6, caractérisé par le fait que la partie sans poignée de marmite rapportée (132) est réalisé sous forme de récipient de cuisson à l'étouffée, percé côté fond, pour la marmite (114) le recevant dans la pile et pourvue de poignées.

8. Jeu de marmites selon la revendication 5 ou 6, caractérisé par le fait que la partie sans poignée de marmite rapportée est réalisée sous forme de clé (134) utilisable séparément.

9. Jeu de marmites selon la revendication 5 ou 6, caractérisé par le fait que la marmite sans poignée est réalisée sous forme d'accessoire intérieur pour bain-marie (136), fermé côté fond, pour la marmite (120) le recevant dans la pile et pourvue de poignées.

10. Jeu de marmites selon l'une des revendications 1 à 9, caractérisé par le fait que les couvercles (124; 126; 128; 130) des marmites (112; 114; 116; 118; 120) présentent centralement une zone (158), en relief creusé vers l'intérieur de la marmite, zone dans laquelle est fixée la poignée de couvercle (160), et que la hauteur de la poignée de couvercle est au maximum égale à la profondeur de la zone de couvercle (158) creusée en profondeur.

11. Jeu de marmites selon l'une des revendications 1 à 10, caractérisé par le fait que les marmites (112; 114; 116; 118; 120) ainsi que les parties sans poignée de marmite rapportée (132; 134; 136), prévues le cas échéant, et la marmite (138) la plus basse, prévue le cas échéant et ayant le plus grand diamètre, sont fabriqués, de manière connue en soi, en tôle d'acier résistant à la corrosion.

12. Jeu de marmites selon la revendication 11, caractérisé par le fait qu'en face extérieure des fonds (150) des marmites (112; 114; 116; 118; 120), pourvues de poignées (156) et prévues pour le chauffage ou la cuisson de plats alimentaires sur des plaques de cuisson, est appliquée une plaque de fond (154) connue en soi, réalisée en un métal thermiquement bon conducteur et accumulant de la chaleur.

13. Jeu de marmites selon l'une des revendications 1 à 12, caractérisé par le fait qu'au moins les marmites (112; 114; 116; 118; 120) pourvues de poignées (116) sont pourvues en face intérieure d'un scellage anti-adhérence, connu en soi, constitué en polytétrafluoroéthylène (PTFE).
